# EUROPÄISCHE PATENTSCHRIFT

(11) **EP 3 527 810 B1**
(45) Veröffentlichungstag und Bekanntmachung des Hinweises auf die Patenterteilung: **20.08.2025**
(21) Anmeldenummer: 19153197.9
(22) Anmeldetag: 23.01.2019
(51) Int. Cl.: F02D 41/24, F02D 41/00, F02D 41/14

(54) **VERFAHREN ZUM BETRIEB EINER VERBRENNUNGSKRAFTMASCHINE**
METHOD FOR OPERATING A COMBUSTION ENGINE
PROCÉDÉ DE FONCTIONNEMENT D'UN MOTEUR À COMBUSTION INTERNE

(30) Priorität: 19.02.2018 DE 102018202477
(43) Veröffentlichungstag der Anmeldung: 21.08.2019
(73) Patentinhaber: VOLKSWAGEN AKTIENGESELLSCHAFT, 38440 Wolfsburg (DE)
(72) Erfinder: Heinken, Sebastian, 38106 Braunschweig (DE)

(56) Entgegenhaltungen:
- DE-A1- 10 158 262
- DE-A1- 10 300 794
- DE-A1- 102004 040 924
- DE-A1- 19 963 358
- FR-A1- 2 899 278
- FR-A1- 2 923 537

## Beschreibung

Die Erfindung betrifft ein Verfahren zum Betrieb einer Verbrennungskraftmaschine mit einer Abgasleitung, die ein Abgas ausgehend von der Verbrennungskraftmaschine über einen Abgasturbolader hin zu einer Umgebung leitet. Insbesondere kann das Verfahren in Kraftfahrzeugen zur Regelung eines Betriebs der Verbrennungskraftmaschine eingesetzt werden. Weiter kann durch das Verfahren ein Abgasgegendruck in der Abgasleitung bestimmt werden und über die Änderung des Abgasgegendrucks eine Beladung einer Abgasbehandlungskomponente (z. B. ein Partikelfilter) mit Ruß.

Bei Verbrennungskraftmaschinen mit Abgasturboladern liegt ein erster Abschnitt der Abgasleitung stromabwärts der Verbrennungskraftmaschine und stromaufwärts des Abgasturboladers und ein zweiter Abschnitt der Abgasleitung stromabwärts des Abgasturboladers. Bei Verbrennungskraftmaschinen kann ein Drucksensor in dem ersten Abschnitt, z. B. in einem Abgaskrümmer der Verbrennungskraftmaschine, angeordnet sein.

Weiter wird die Verbrennungskraftmaschine im Betrieb geregelt. Insbesondere werden die folgenden Regelungen vorgenommen: Regelung eines Ladedrucks für die Verbrennungskraftmaschine, Regelung eines Ladungswechselmodells (also der Zufuhr von Frischluft, Abgas, Kraftstoff zur Verbrennung in den Brennräumen der Verbrennungskraftmaschine sowie das Abführen des Abgases aus den Brennräumen; weiter die Zündzeitpunkte, die Ventilöffnungszeitpunkte, etc.) der Verbrennungskraftmaschine; Diagnose einer Abgasturbolader-Überdrehzahl; Regelung einer Regeneration einer in dem zweiten Abschnitt angeordneten Abgasbehandlungskomponente. Diese Regelungen sind insbesondere abhängig von einem Abgasgegendruck, der in dem zweiten Abschnitt der Abgasleitung stromabwärts des Abgasturboladers vorliegt.

Die Anordnung eines Drucksensors in diesem nur schwierig zugänglichen Teil der Abgasleitung ist jedoch aufwändig und kostspielig. Es sind daher Ansätze aus dem Stand der Technik bekannt, den Abgasgegendruck in dem zweiten Abschnitt abzuschätzen.

Aus der EP 1 491 747 A2 ist ein Verfahren bekannt, durch das ein Abgasgegendruck rechnerisch ermittelt werden kann.

Aus der FR 2 899 278 A1 und der DE 10 2004 040 924 A1 ist jeweils bekannt, dass ein Druck stromabwärts eines Turboladers aus den Messwerten eines Sensors bestimmt werden kann, der zwischen Verbrennungskraftmaschine und Turbolader angeordnet ist. Weiter ist bekannt, das die Druckwerte an diesen beiden Stellen bei bestimmten Betriebspunkten der Verbrennungskraftmaschine, bei denen eine nur sehr geringe Expansion des Abgases über den Turbolader erfolgt, einander sehr ähnlich sein können.

Aus der FR 2 923 537 A1 ist ein Verfahren bekannt, durch das der Druck stromabwärts eines Turboladers bestimmt werden kann.

Diese Schätz- oder Rechenverfahren sind zumindest in einigen Betriebssituationen für eine Regelung der Verbrennungskraftmaschine zu ungenau.

Aufgabe der vorliegenden Erfindung ist es, die mit Bezug auf den Stand der Technik angeführten Probleme zumindest teilweise zu lösen. Insbesondere soll ein Verfahren angegeben werden, durch das eine möglichst genaue Bestimmung des in einem zweiten Abschnitt, also stromabwärts eines Abgasturboladers, vorliegenden Abgasgegendruckes ermöglicht werden kann. Der so ermittelte Abgasgegendruck kann für die verschiedenen Regelungen der Verbrennungskraftmaschine genutzt werden, so dass ein effektiver Betrieb der Verbrennungskraftmaschine ermöglicht wird.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden. Der Schutzumfang wird durch die beigefügten Ansprüche definiert.

Es wird ein Verfahren zum Betrieb einer Verbrennungskraftmaschine mit einer Abgasleitung vorgeschlagen. Die Abgasleitung leitet ein Abgas ausgehend von der Verbrennungskraftmaschine über einen Abgasturbolader (z. B. an eine Umgebung, ggf. zumindest teilweise über eine Abgasrückführleitung zurück zur Verbrennungskraftmaschine). Über eine Messung eines ersten Druckes in einem ersten Abschnitt der Abgasleitung stromabwärts der Verbrennungskraftmaschine und stromaufwärts des Abgasturboladers (z. B. durch einen Drucksensor, also durch einen ersten Sensor) wird ein zweiter Druck in einem zweiten Abschnitt der Abgasleitung stromabwärts des Abgasturboladers bestimmt. Die Bestimmung des zweiten Drucks wird aus der Bedingung bzw. Beziehung abgeleitet, wonach der erste Druck in vorbestimmten Betriebspunkten der Verbrennungskraftmaschine bei vorbestimmten Kurbelwellenwinkelstellungen dem zweiten Druck (im Wesentlichen) entspricht.

Mit anderen Worten könnte das Verfahren (alternativ oder in Ergänzung) so formuliert werden:
1. Zumindest Messen des ersten Druckes und zweiten Druckes während mehrerer Betriebspunkte der Verbrennungskraftmaschine und mehrerer Kurbelwellenwinkelstellungen der Verbrennungskraftmaschine,
2. Identifizieren von zumindest einem Betriebspunkt und einer Kurbelwellenwinkelstellung der Verbrennungskraftmaschine, bei denen der erste Druck und der zweite Druck im Wesentlichen übereinstimmen und Festlegen dieser Kurbelwellenwinkelstellung oder dieses Betriebspunktes als Regelbasis.
3. Regeln des Betriebs der Verbrennungskraftmaschine anhand von gemessenen ersten Drücken und in Abhängigkeit von zweiten Drücken, die von der Regelbasis vorgegebenen werden.

Schritt 1. und 2. werden (einmalig) in einem Initiierungsprozess durchgeführt (z. B. auf einem Prüfstand), während Schritt 3. im (Fahr-)Betrieb der Verbrennungskraftmaschine im Kraftfahrzeug ausgeführt wird.

Die Identifikation von "übereinstimmenden" Drücken kann derart erfolgen, dass eine vorgegeben maximale Abweichung nicht überschritten ist, die sich aus einem Vergleich von erstem Druck und zweiten Druck ergibt. Die vorgegebene maximale Abweichung kann beispielsweise 2%, 1% oder sogar 0,5% betragen.

Die Festlegung der Regelbasis erfolgt in Form einer Kennlinie, wobei die identifizierten Kurbelwellenwinkelstellungen und Betriebspunkte mindestens eine Stütz- oder Referenzgröße sind.

Vor Schritt 3. wird ein ggf. vorgesehener (Druck-)Sensor im zweiten Abschnitt entfernt. Es ist möglich, dass nur im ersten Abschnitt ein Sensor zur Messung des ersten Drucks vorgesehen ist und eingesetzt wird.

Der zweite Abschnitt erstreckt sich ausgehend von dem Abgasturbolader weiter stromabwärts, insbesondere entlang des Hauptabgasstrangs bis hin zur Umgebung. Insbesondere ist in dem zweiten Abschnitt mindestens eine Abgasbehandlungskomponente (Partikelfilter, Katalysator, Strömungsbeeinflusser, Einspritzvorrichtung, Heizvorrichtung, etc.) angeordnet.

Der zweite Druck ist zwischen dem Abgasturbolader und einer am nächsten stromabwärts vom Abgasturbolader angeordneten Abgasbehandlungskomponente zu ermitteln.

Der erste Druck in dem ersten Abschnitt ändert sich in Abhängigkeit von dem jeweils vorliegenden Betriebspunkt und von der Kurbelwellenwinkelstellung (in dem jeweiligen Betriebspunkt). In Abhängigkeit von der Kurbelwinkelstellung werden die Auslassventile der Brennräume betätigt, so dass Abgas aus den Brennräumen in den ersten Abschnitt eintreten kann. Es ist nun festgestellt worden, dass in konkret zu bestimmenden Betriebspunkten und für dann konkret vorliegende bestimmte Kurbelwellenwinkelstellungen der erste Druck stromaufwärts des Abgasturboladers den gleichen Betrag aufweist wie der zweite Druck stromabwärts des Abgasturboladers.

Weiter ist festgestellt worden, dass dieser Zeitpunkt im ersten Verlauf des ersten Druckes sehr genau bestimmbar ist, so dass aus dem ersten Verlauf des ersten Druckes der zweite Druck mit hoher Genauigkeit abgeleitet werden kann.

Weiter ist bekannt, dass der zweite Druck einen bestimmten zweiten Verlauf in Abhängigkeit von dem Verlauf des gemessenen ersten Druckes aufweist.

Aus diesen Bedingungen wurde abgeleitet, dass der zweite Verlauf des zweiten Druckes in Abhängigkeit von dem ersten Verlauf des gemessenen ersten Druckes bestimmt werden kann. Weiter kann aufgrund einer Veränderung des gemessenen ersten Druckes, in den bestimmten Betriebspunkten und bei den bestimmten Kurbelwellenwinkelstellungen, eine Veränderung des zweiten Druckes und damit ein aktuell vorliegender Abgasgegendruck in dem zweiten Abschnitt der Abgasleitung bestimmt werden.

Der so (genau) bestimmte Abgasgegendruck kann für die Regelung z. B. der Verbrennungskraftmaschine genutzt werden. Weiter kann über die Veränderung des gemessenen ersten Druckes und damit des ermittelten zweiten Druckes eine Änderung des Abgasgegendruckes bestimmt werden. Die Änderung des Abgasgegendruckes wird insbesondere durch eine zunehmende Beladung z. B. einer in dem zweiten Abschnitt angeordneten Abgasbehandlungskomponente mit Ruß verursacht. Über die festgestellte Änderung des Abgasgegendruckes kann insbesondere der Zustand der Abgasbehandlungskomponente (also z. B. ein Druckverlust über die Abgasbehandlungskomponente) bestimmt werden. Bevorzugt kann ein Zeitpunkt für eine Regeneration der Abgasbehandlungskomponente bestimmt werden. Weiter kann über den aktuell vorliegenden Abgasgegendruck auch eine Effektivität der Regeneration überprüft werden.

Insbesondere wird vorgeschlagen, dass die Verbrennungskraftmaschine zur Ermittlung der Betriebspunkte und der Kurbelwellenwinkelstellungen an einem Prüfstand in einem Prüfstandverfahren betrieben wird.

In einem Prüfstandverfahren kann in dem zweiten Abschnitt ein zweiter (Druck-)Sensor angeordnet werden und so der zweite Druck und der zweite Verlauf in dem zweiten

Abschnitt messtechnisch erfasst werden. In dem Prüfstandverfahren können so für jede Konfiguration von Verbrennungskraftmaschine, Abgasleitung, Abgasbehandlungskomponenten, Antriebsstrang (z. B. Getriebe, zusätzliche Antriebseinheiten, etc.) die Betriebspunkte und Kurbelwinkelstellungen ermittelt werden, bei denen die Beträge des ersten Drucks und des zweiten Drucks gleich groß sind.

Die so im Prüfstandverfahren ermittelten Betriebspunkte und Kurbelwinkelstellungen können dann im bereits beschriebenen Verfahren verwendet werden, so dass die in großer Stückzahl hergestellte Verbrennungskraftmaschine gleichen Typs (wie die im Prüfstandverfahren verwendete Konfiguration) ohne zweiten Sensor eingesetzt werden kann.

Der Betriebspunkt der Verbrennungskraftmaschine ist insbesondere abhängig von den aktuell vorliegenden Betriebsparametern der Verbrennungskraftmaschine (Zündzeitpunkte, Einspritzmenge, Verdichtungsverhältnis, etc.), einem Abgasmassenstrom, einer Position eines Stellglieds des Turboladers sowie einer Position einer Nockenwelle.

Insbesondere ist für das Prüfstandverfahren ein Zustand der Abgasleitung stromabwärts des Abgasturboladers hinsichtlich eines Durchströmungswiderstands und eines sich daraus ergebenden aktuellen Abgasgegendrucks im zweiten Abschnitt bekannt (oder wird im Rahmen des Prüfstandverfahrens ermittelt). Das Prüfstandverfahren umfasst zumindest die folgenden Schritte:
a) Messen eines Verlaufs des ersten Druckes während des Betriebs der Verbrennungskraftmaschine mit einem ersten Sensor;
b) Messen eines Verlaufs des zweiten Druckes während des Betriebs der Verbrennungskraftmaschine mit einem zweiten Sensor;
c) Ermitteln der Betriebspunkte und der Kurbelwellenwinkelstellungen, bei denen der erste Druck dem zweiten Druck (im Wesentlichen) entspricht.

Der Zustand der Abgasleitung umfasst z. B. die Beladung der mindestens einen Abgasbehandlungskomponente in dem zweiten Abschnitt. Der Zustand umfasst insbesondere die Kenntnis aller Faktoren, die den Abgasgegendruck im zweiten Abschnitt beeinflussen. Insbesondere sind dies (ausschließlich) Faktoren, die sich z. B. bei Durchleitung eines Gases (ohne Ruß und Reaktion in einer der Abgasbehandlungskomponenten bzw. Interaktion mit dem zweiten Abschnitt der Abgasleitung) nicht verändern.

Insbesondere kann aus der Kenntnis, dass sich der erste Druck bzw. der erste Verlauf ausgehend von diesem bekannten Zustand ändert, auf eine oder mehrere Ursachen für die daraus abgeleitete Änderung des zweiten Druckes bzw. des zweiten Verlaufs geschlossen werden. Insbesondere kann so ein Beladungszustand einer Abgasbehandlungskomponente (z. B. eines Partikelfilters) ermittelt werden.

Bevorzugt kann ausgehend von Schritt c) eine Kennlinie für einen Adaptionswert ermittelt werden, durch den für andere Betriebspunkte der Verbrennungskraftmaschine ein zweiter Druck aus der Messung des ersten Drucks bestimmt wird. Diese Kennlinie umfasst insbesondere die in Schritt c) ermittelten Betriebspunkte und Kurbelwellenwinkelstellungen als Stützpunkte und wird daraus für andere Betriebspunkte generiert. Über den Adaptionswert ist es insbesondere möglich in diesen anderen Betriebspunkten ebenfalls den zweiten Druck ausgehend von dem gemessen ersten Druck zu bestimmen.

Insbesondere wird im Betrieb der Verbrennungskraftmaschine anhand einer Veränderung des ersten Druckes der zweite Druck und damit ein aktueller Abgasgegendruck im zweiten Abschnitt bestimmt.

Der aktuelle Abgasgegendruck kann zumindest für die folgenden Regelungsverfahren verwendet werden:
(1) Regelung eines Ladedrucks für die Verbrennungskraftmaschine (insbesondere des bereitgestellten Drucks auf der Frischluftseite der Verbrennungskraftmaschine);
(2) Regelung eines Ladungswechselmodells der Verbrennungskraftmaschine (insbesondere wird darüber die Zufuhr von Frischluft, Abgas, Kraftstoff zur Verbrennung in den Brennräumen der Verbrennungskraftmaschine sowie das Abführen des Abgases aus den Brennräumen geregelt; weiter die Zündzeitpunkte, die Ventilöffnungszeitpunkte, etc.);
(3) Korrektur des Ladungswechselmodells anhand des aktuellen Abgasgegendrucks;
(4) Diagnose eines Abgasturbolader-Bauteils (z. B. Analyse der Abgasturboladerdrehzahl zur Vermeidung der Überschreitung von vorbestimmten Grenzdrehzahlen; zum Schutz des Abgasturboladers vor mechanischer und/oder thermischer Schädigung);
(5) Regelung einer Regeneration einer in dem zweiten Abschnitt angeordneten Abgasbehandlungskomponente (z. B. eines Partikelfilters, in dem z. B. die Temperatur des Abgases zumindest temporär erhöht wird oder zusätzlicher Sauerstoff und/oder Kraftstoff bereitgestellt wird).

Diese Regelungen sind insbesondere abhängig von einem Abgasgegendruck, der in dem zweiten Abschnitt der Abgasleitung stromabwärts des Abgasturboladers vorliegt.

Insbesondere ist in dem zweiten Abschnitt zumindest eine Abgasbehandlungskomponente (z. B. ein Partikelfilter) angeordnet, durch die in dem zweiten Abschnitt stromaufwärts der Abgasbehandlungskomponente der aktuelle Abgasgegendruck in Abhängigkeit zumindest von einer Beladung der Abgasbehandlungskomponente mit Ruß beeinflusst wird. Insbesondere ist die Beladung durch die Bestimmung des aktuellen Abgasgegendrucks (bzw. des zweiten Drucks) bestimmbar. Insbesondere kann so auch die Wirksamkeit einer durchgeführten Regeneration des Partikelfilters überprüft werden.

Die Beladung z. B. eines Partikelfilters bezeichnet insbesondere die Menge bzw. Masse von Feststoffen (wie z. B. Rußpartikel), die im Partikelfilter aktuell gespeichert sind. Ein Partikelfilter im vorliegenden Sinn betrifft insbesondere einen so genannten Wall-Flow-Filter, also ein Bauteil mit einer Vielzahl von Kanälen (z. B. nach Art einer Wabenstruktur), die insbesondere wechselseitig verschlossen sind und damit ein Durchdringen des Abgases mit den Feststoffen durch eine gaspermeable bzw. poröse Wand erfordern. Dabei werden die Feststoffe an bzw. in den Wänden abgeschieden und/oder zurückgehalten. Mit zunehmender Beladung setzen sich die Wände bzw. die Kanäle zu.

Weiter wird ein Computerprogramm vorgeschlagen, welches eingerichtet ist, das bereits beschriebene Verfahren auszuführen. Insbesondere wird eine Motorsteuerung vorgeschlagen, welche das hier vorgeschlagene Verfahren zumindest teilweise ausführt.

Weiter wird ein maschinenlesbares Speichermedium (z. B. in einem Steuergerät, das der Verbrennungskraftmaschine zugeordnet ist) vorgeschlagen, auf dem das bereits beschriebene Computerprogramm gespeichert ist.

Weiter wird eine Verbrennungskraftmaschine mit einer Abgasleitung vorgeschlagen, durch die ein Abgas ausgehend von der Verbrennungskraftmaschine über einen Abgasturbolader leitbar ist. Die Verbrennungskraftmaschine ist insbesondere für den Verbau in einem Kraftfahrzeug vorgesehen oder in einem Kraftfahrzeug angeordnet.

Die Abgasleitung weist einen ersten Abschnitt stromabwärts der Verbrennungskraftmaschine und stromaufwärts des Abgasturboladers und einen zweiten Abschnitt stromabwärts des Abgasturboladers auf. In dem ersten Abschnitt ist ein erster Sensor zur Messung eines ersten Druckes angeordnet. Die Verbrennungskraftmaschine umfasst weiter ein Steuergerät, das zur Durchführung des bereits beschriebenen Verfahrens geeignet ist bzw. geeignet ausgeführt und eingerichtet ist bzw. das Verfahren ausführt oder ausführen kann.

Das Verfahren ist insbesondere für alle Arten von Verbrennungskraftmaschinen (OttoMotor, Diesel-Motor, etc.) und insbesondere in Kombination mit weiteren Antriebseinheiten (elektrische Antriebe) einsetzbar.

Die Ausführungen zu dem vorgeschlagenen Verfahren sind auf die vorgeschlagene Verbrennungskraftmaschine, das Computerprogramm und das Speichermedium übertragbar und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine Verbrennungskraftmaschine mit einer Abgasleitung; und
- Fig. 2:: ein Druck-Zeit-Diagramm.

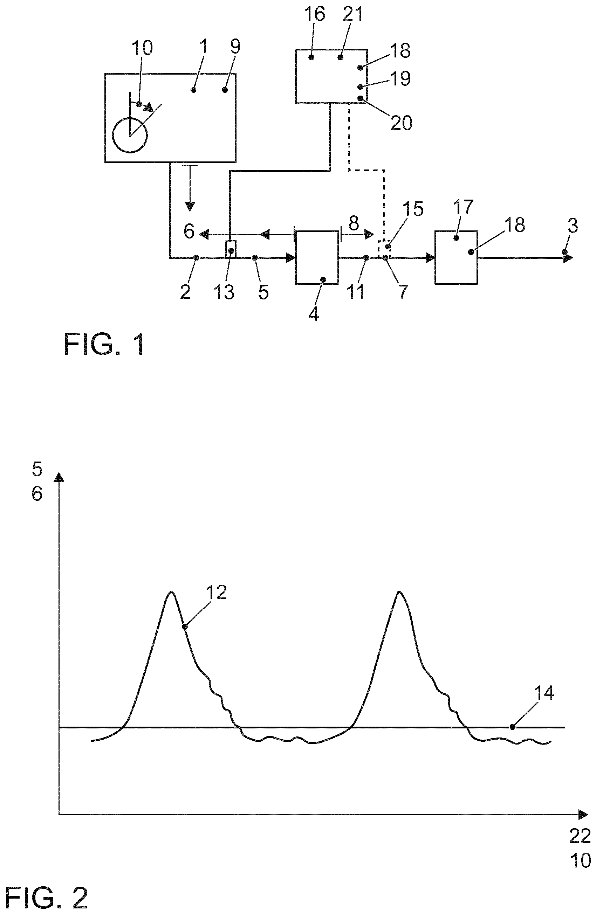

Die Figur 1 zeigt eine Verbrennungskraftmaschine 1 mit einer Abgasleitung 2. Durch die Abgasleitung 2 wird ein Abgas 3 ausgehend von der Verbrennungskraftmaschine 1 über einen Abgasturbolader 4 geleitet. Die Abgasleitung 2 weist einen ersten Abschnitt 6 stromabwärts der Verbrennungskraftmaschine 1 und stromaufwärts des Abgasturboladers 4 und einen zweiten Abschnitt 8 stromabwärts des Abgasturboladers 4 auf. In dem ersten Abschnitt 6 ist ein erster Sensor 13 zur Messung eines ersten Druckes 5 angeordnet. Die Verbrennungskraftmaschine 1 umfasst weiter ein Steuergerät 21, das zur Durchführung des beschriebenen Verfahrens geeignet ist.

Über eine Messung eines ersten Druckes 5 in einem ersten Abschnitt 6 der Abgasleitung 2 wird ein zweiter Druck 7 in einem zweiten Abschnitt 8 der Abgasleitung 2 stromabwärts des Abgasturboladers 4 bestimmt. Diese Bestimmung des zweiten Drucks 7 wird aus der Bedingung abgeleitet, dass in bestimmten Betriebspunkten 9 der Verbrennungskraftmaschine 1 bei bestimmten Kurbelwellenwinkelstellungen 10 der erste Druck 5 dem zweiten Druck 7 entspricht.

In dem zweiten Abschnitt 8 ist eine Abgasbehandlungskomponente 17 (Partikelfilter, Katalysator, Strömungsbeeinflusser, Einspritzvorrichtung, Heizvorrichtung, etc.) angeordnet.

In einem Prüfstandverfahren kann in dem zweiten Abschnitt 8 ein zweiter (Druck-)Sensor 15 (hier gestrichelt angedeutet) angeordnet werden und so der zweite Druck 7 und der zweite Verlauf 14 in dem zweiten Abschnitt 8 messtechnisch erfasst werden. In dem Prüfstandverfahren können so für jede Konfiguration von Verbrennungskraftmaschine 1, Abgasleitung 2, Abgasbehandlungskomponenten 17, Antriebsstrang (z. B. Getriebe, zusätzliche Antriebseinheiten, etc.) die Betriebspunkte 9 und Kurbelwinkelstellungen 10 ermittelt werden, bei denen die Beträge des ersten Drucks 5 und des zweiten Drucks 7 gleich groß sind.

Die so im Prüfstandverfahren ermittelten Betriebspunkte 9 und Kurbelwinkelstellungen 10 können dann im bereits beschriebenen Verfahren verwendet werden, so dass die in großer Stückzahl hergestellte Verbrennungskraftmaschine 1 gleichen Typs (wie die im Prüfstandverfahren verwendete Konfiguration) ohne zweiten Sensor 15 eingesetzt werden kann.

In dem zweiten Abschnitt 8 ist eine Abgasbehandlungskomponente 4 (z. B. ein Partikelfilter) angeordnet, durch die in dem zweiten Abschnitt 8 stromaufwärts der Abgasbehandlungskomponente 4 der aktuelle Abgasgegendruck 11 in Abhängigkeit zumindest von einer Beladung 18 der Abgasbehandlungskomponente 17 mit Ruß beeinflusst wird. Die Beladung 18 ist durch die Bestimmung des aktuellen Abgasgegendrucks 11 (bzw. des zweiten Drucks 7) bestimmbar.

Das Steuergerät 21 kann die Drücke 5, 7 erfassen. In dem Steuergerät 21 ist das Computerprogramm 19 hinterlegt, das auf einem maschinenlesbaren Speichermedium 20 gespeichert ist. Weiter ist in dem Steuergerät 21 die Kennlinie 16 hinterlegt.

Fig. 2 zeigt ein Druck-Zeit-Diagramm. Auf der vertikalen Achse ist der Druck 5, 7 aufgetragen. Auf der horizontalen Achse die Zeit 22 bzw. die sich wiederholende Kurbelwellenwinkelstellung 10.

Der erste Druck 5 in dem ersten Abschnitt 6 ändert sich in Abhängigkeit von dem jeweils vorliegenden Betriebspunkt 9 und von der Kurbelwellenwinkelstellung 10 (in dem jeweiligen Betriebspunkt 9). In Abhängigkeit von der Kurbelwellenwinkelstellung 10 werden die Auslassventile der Brennräume betätigt, so dass Abgas 3 aus den Brennräumen in den ersten Abschnitt 6 eintreten kann. Es ist nun festgestellt worden, dass in bestimmten Betriebspunkten 9 und für dann vorliegende bestimmte Kurbelwellenwinkelstellungen 10 der erste Druck 5 stromaufwärts des Abgasturboladers 4 den gleichen Betrag aufweist wie der zweite Druck 7 stromabwärts des Abgasturboladers 4 (siehe Schnittpunkte des ersten Verlaufs 12 des ersten Druckes 5 und des zweiten Verlaufs 14 des zweiten Druckes 7). Weiter ist festgestellt worden, dass dieser Zeitpunkt im ersten Verlauf 12 des ersten Druckes 5 sehr genau bestimmbar ist, so dass aus dem ersten Verlauf 12 des ersten Druckes 5 der zweite Druck 7 mit hoher Genauigkeit abgeleitet werden kann.

Weiter ist bekannt, dass der zweite Druck 7 einen bestimmten zweiten Verlauf 14 in Abhängigkeit von dem ersten Verlauf 12 des ersten Druckes 5 aufweist.

Aus diesen Bedingungen wurde abgeleitet, dass der zweite Verlauf 14 des zweiten Druckes 7 in Abhängigkeit von dem ersten Verlauf 12 des ersten Druckes 5 bestimmt werden kann. Weiter kann aufgrund einer Veränderung des ersten Druckes 5, insbesondere in den bestimmten Betriebspunkten 9 und bei den bestimmten Kurbelwellenwinkelstellungen 10, eine Veränderung des zweiten Druckes 7 und damit ein aktuell vorliegender Abgasgegendruck 11 in dem zweiten Abschnitt 8 der Abgasleitung 2 bestimmt werden.

### BEZUGSZEICHENLISTE

- 1: Verbrennungskraftmaschine
- 2: Abgasleitung
- 3: Abgas
- 4: Abgasturbolader
- 5: erster Druck
- 6: erster Abschnitt
- 7: zweiter Druck
- 8: zweiter Abschnitt
- 9: Betriebspunkt
- 10: Kurbelwellenwinkelstellung
- 11: Abgasgegendruck
- 12: erster Verlauf
- 13: erster Sensor
- 14: zweiter Verlauf
- 15: zweiter Sensor
- 16: Kennlinie
- 17: Abgasbehandlungskomponente
- 18: Beladung
- 19: Computerprogramm
- 20: maschinenlesbares Speichermedium
- 21: Steuergerät
- 22: Zeit

## Patentansprüche

1. Verfahren zum Betrieb einer Verbrennungskraftmaschine (1) mit einer Abgasleitung (2), die ein Abgas (3) ausgehend von der Verbrennungskraftmaschine (1) über einen Abgasturbolader (4) leitet, wobei über eine Messung eines ersten Druckes (5) in einem ersten Abschnitt (6) der Abgasleitung (2) stromabwärts der Verbrennungskraftmaschine (1) und stromaufwärts des Abgasturboladers (4) ein zweiter Druck (7) in einem zweiten Abschnitt (8) der Abgasleitung (2) stromabwärts des Abgasturboladers (4) bestimmt wird; **dadurch gekennzeichnet, dass** diese Bestimmung des zweiten Drucks (7) aus einer Beziehung abgeleitet wird, wonach der erste Druck (5) in vorbestimmten Betriebspunkten (9) der Verbrennungskraftmaschine (1) bei vorbestimmten Kurbelwellenwinkelstellungen (10) dem zweiten Druck (7) entspricht; wobei der erste Druck (5) in dem ersten Abschnitt (6) sich in Abhängigkeit von dem jeweils vorliegenden Betriebspunkt (9) und von der Kurbelwellenwinkelstellung (10) in dem jeweiligen Betriebspunkt (9) ändert; wobei in Abhängigkeit von der Kurbelwellenwinkelstellung (10) die Auslassventile der Brennräume betätigt werden, so dass das Abgas (3) aus den Brennräumen in den ersten Abschnitt (6) eintreten kann; wobei in konkret zu bestimmenden Betriebspunkten (9) und für dann konkret vorliegende bestimmte Kurbelwellenwinkelstellungen (10) der erste Druck (5) stromaufwärts des Abgasturboladers (4) den gleichen Betrag aufweist wie der zweite Druck (7) stromabwärts des Abgasturboladers (4); wobei dieser Zeitpunkt im ersten Verlauf (12) des ersten Druckes (5) anhand von Schnittpunkten des ersten Verlaufs (12) des ersten Druckes (5) und des davon unterschiedlichen zweiten Verlaufs (14) des zweiten Druckes (7) sehr genau im Rahmen eines Prüfstandverfahrens bestimmt werden, so dass aus dem ersten Verlauf (12) des ersten Druckes (5) der zweite Druck (7) mit hoher Genauigkeit abgeleitet werden kann.

2. Verfahren nach Patentanspruch 1, wobei zur Ermittlung der Betriebspunkte (9) und der Kurbelwellenwinkelstellungen (10) die Verbrennungskraftmaschine (1) an einem Prüfstand in einem Prüfstandverfahren betrieben wird.

3. Verfahren nach Patentanspruch 2, wobei für das Prüfstandverfahren ein Zustand der Abgasleitung (2) stromabwärts des Abgasturboladers (4) hinsichtlich eines Durchströmungswiderstands und eines sich daraus ergebenden aktuellen Abgasgegendrucks (11) im zweiten Abschnitt (8) bekannt ist; wobei das Prüfstandverfahren zumindest die folgenden Schritte umfasst:
a) Messen eines ersten Verlaufs (12) des ersten Druckes (5) während des Betriebs der Verbrennungskraftmaschine (1) mit einem ersten Sensor (13);
b) Messen eines zweiten Verlaufs (14) des zweiten Druckes (7) während des Betriebs der Verbrennungskraftmaschine (1) mit einem zweiten Sensor (15);
c) Ermitteln der Betriebspunkte (9) und der Kurbelwellenwinkelstellungen (10), bei denen der erste Druck (5) dem zweiten Druck (7) entspricht.

4. Verfahren nach Patentanspruch 3, wobei ausgehend von Schritt c) eine Kennlinie (16) für einen Adaptionswert ermittelt wird, durch den für andere Betriebspunkte (9) der Verbrennungskraftmaschine (1) ein zweiter Druck (7) aus der Messung des ersten Drucks (5) bestimmt wird.

5. Verfahren nach einem der vorhergehenden Patentansprüche, wobei im Betrieb der Verbrennungskraftmaschine (1) anhand einer Veränderung des ersten Druckes (5) der zweite Druck (7) und damit ein aktueller Abgasgegendruck (11) im zweiten Abschnitt (8) bestimmt wird.

6. Verfahren nach Patentanspruch 5, wobei der aktuelle Abgasgegendruck (11) zumindest für die folgenden Regelungsverfahren verwendet wird:
(1) Regelung eines Ladedrucks für die Verbrennungskraftmaschine (1);
(2) Regelung eines Ladungswechselmodells der Verbrennungskraftmaschine (1);
(3) Diagnose einer Abgasturbolader-Überdrehzahl;
(4) Regelung einer Regeneration einer in dem zweiten Abschnitt (8) angeordneten Abgasbehandlungskomponente (17).

7. Verfahren nach einem der vorhergehenden Patentansprüche 5 und 6, wobei in dem zweiten Abschnitt (8) zumindest eine Abgasbehandlungskomponente (17) angeordnet ist, durch die in dem zweiten Abschnitt (8) stromaufwärts der Abgasbehandlungskomponente (17) der aktuelle Abgasgegendruck (11) in Abhängigkeit zumindest von einer Beladung (18) der Abgasbehandlungskomponente (17) mit Ruß beeinflusst wird; wobei die Beladung (18) durch die Bestimmung des aktuellen Abgasgegendrucks (11) bestimmbar ist.

8. Verbrennungskraftmaschine (1) mit einer Abgasleitung (2), durch die ein Abgas (3) ausgehend von der Verbrennungskraftmaschine (1) über einen Abgasturbolader (4) leitbar ist, wobei die Abgasleitung (2) einen ersten Abschnitt (6) stromabwärts der Verbrennungskraftmaschine (1) und stromaufwärts des Abgasturboladers (4) und einen zweiten Abschnitt (8) stromabwärts des Abgasturboladers (4) aufweist; wobei in dem ersten Abschnitt (6) ein erster Sensor (13) zur Messung eines ersten Druckes (5) angeordnet ist; wobei die Verbrennungskraftmaschine (1) weiter ein Steuergerät (21) umfasst, das zur Durchführung des Verfahrens nach einem der vorhergehenden Patentansprüche 1 bis 7 geeignet ist.

9. Computerprogramm (19), welches Programmcode umfasst, der das Verfahren nach einem der Patentansprüche 1 bis 7 ausführt, wenn es auf dem Steuergerät (21) der Verbrennungskraftmaschine nach Anspruch 8 abläuft.

10. Maschinenlesbares Speichermedium (20), auf dem das Computerprogramm (19) nach Patentanspruch 9 gespeichert ist.

## Claims

1. Method for operating an internal combustion engine (1) having an exhaust line (2) which conducts an exhaust gas (3) from the internal combustion engine (1) via an exhaust gas turbocharger (4), a second pressure (7) in a second portion (8) of the exhaust line (2) downstream of the exhaust gas turbocharger (4) being determined by measuring a first pressure (5) in a first portion (6) of the exhaust line (2) downstream of the internal combustion engine (1) and upstream of the exhaust gas turbocharger (4); **characterized in that** this determination of the second pressure (7) is derived from a relationship according to which the first pressure (5) in predetermined operating points (9) of the internal combustion engine (1) corresponds to the second pressure (7) at predetermined crankshaft angle positions (10); the first pressure (5) in the first portion (6) changing depending on each existing operating point (9) and on the crankshaft angle position (10) in the relevant operating point (9); the exhaust valves of the combustion chambers being actuated depending on the crankshaft angle position (10), so that the exhaust gas (3) from the combustion chambers can enter the first portion (6); in operating points (9) to be specifically determined and for determined crankshaft angle positions (10) which are then definitely present, the first pressure (5) upstream of the exhaust gas turbocharger (4) having the same magnitude as the second pressure (7) downstream of the exhaust gas turbocharger (4); this point in time in the first curve (12) of the first pressure (5) being determined very precisely as part of a test bench method on the basis of intersection points of the first curve (12) of the first pressure (5) and the second curve (14), which is different therefrom, of the second pressure (7), so that the second pressure (7) can be derived with a high level of accuracy from the first curve (12) of the first pressure (5).

2. Method according to claim 1, wherein the internal combustion engine (1) is operated on a test bench in a test bench method in order to ascertain the operating points (9) and the crankshaft angle positions (10).

3. Method according to claim 2, wherein, for the test bench method, a state of the exhaust line (2) downstream of the exhaust gas turbocharger (4) with regard to a through-flow resistance and a resulting current exhaust gas back-pressure (11) in the second portion (8) is known; wherein the test bench method comprises at least the following steps:
a) measuring, using a first sensor (13), a first curve (12) of the first pressure (5) during operation of the internal combustion engine (1);
b) measuring, using a second sensor (15), a second curve (14) of the second pressure (7) during operation of the internal combustion engine (1);
c) ascertaining the operating points (9) and the crankshaft angle positions (10) at which the first pressure (5) corresponds to the second pressure (7).

4. Method according to claim 3, wherein, starting from step c), a characteristic curve (16) for an adaptation value is ascertained, by means of which a second pressure (7) is determined from the measurement of the first pressure (5) for other operating points (9) of the internal combustion engine (1).

5. Method according to any of the preceding claims, wherein, during operation of the internal combustion engine (1), the second pressure (7) and thus a current exhaust gas back-pressure (11) in the second portion (8) is determined on the basis of a change in the first pressure (5).

6. Method according to claim 5, wherein the current exhaust back-pressure (11) is used at least for the following control processes:
(1) controlling a boost pressure for the internal combustion engine (1);
(2) controlling a charge exchange model of the internal combustion engine (1);
(3) diagnosing exhaust gas turbocharger overspeed;
(4) controlling regeneration of an exhaust gas treatment component (17) arranged in the second portion (8).

7. Method according to one of the preceding claims 5 and 6, wherein at least one exhaust gas treatment component (17) is arranged in the second portion (8), by means of which the current exhaust gas back-pressure (11) is influenced in the second portion (8) upstream of the exhaust gas treatment component (17) depending on at least a loading (18) of the exhaust gas treatment component (17) with soot; wherein the loading (18) can be determined by determining the current exhaust gas back-pressure (11).

8. Internal combustion engine (1) comprising an exhaust line (2) through which an exhaust gas (3) can be conducted from the internal combustion engine (1) via an exhaust gas turbocharger (4), wherein the exhaust line (2) has a first portion (6) downstream of the internal combustion engine (1) and upstream of the exhaust gas turbocharger (4) and a second portion (8) downstream of the exhaust gas turbocharger (4); wherein a first sensor (13) for measuring a first pressure (5) is arranged in the first portion (6); wherein the internal combustion engine (1) further comprises a control unit (21) which is suitable for carrying out the method according to any of the preceding claims 1 to 7.

9. Computer program (19) comprising program code that executes the method according to any of claims 1 to 7 when it runs on the control unit (21) of the internal combustion engine according to claim 8.

10. Machine-readable storage medium (20) on which the computer program (19) according to claim 9 is stored.

## Revendications

1. Procédé pour le fonctionnement d'un moteur à combustion interne (1) comportant une conduite de gaz d'échappement (2) qui conduit un gaz d'échappement (3) à partir du moteur à combustion interne (1) par l'intermédiaire d'un turbocompresseur à gaz d'échappement (4), dans lequel une mesure d'une première pression (5) dans une première section (6) de la conduite de gaz d'échappement (2) en aval du moteur à combustion interne (1) et en amont du turbocompresseur à gaz d'échappement (4) permet de déterminer une seconde pression (7) dans une seconde section (8) de la conduite de gaz d'échappement (2) en aval du turbocompresseur à gaz d'échappement (4) ; **caractérisé en ce que** cette détermination de la seconde pression (7) est déduite d'une relation selon laquelle la première pression (5), dans des points de fonctionnement (9) prédéterminés du moteur à combustion interne (1), correspond à la seconde pression (7) pour des positions d'angle de vilebrequin (10) prédéterminées ; dans lequel la première pression (5) dans la première section (6) varie en fonction du point de fonctionnement (9) respectif existant et de la position d'angle de vilebrequin (10) dans le point de fonctionnement (9) respectif ; dans lequel les soupapes d'échappement des chambres de combustion sont actionnées en fonction de la position d'angle de vilebrequin (10), de sorte que les gaz d'échappement (3) peuvent entrer dans la première section (6) en provenance des chambres de combustion ; dans lequel la première pression (5) en amont du turbocompresseur à gaz d'échappement (4) présente la même valeur que la seconde pression (7) en aval du turbocompresseur à gaz d'échappement (4) dans des points de fonctionnement (9) à déterminer concrètement et pour des positions d'angle de vilebrequin (10) déterminées et existant concrètement ; dans lequel ce moment dans la première courbe (12) de la première pression (5) est déterminé très précisément dans le cadre d'un procédé sur banc d'essai à l'aide de points d'intersection de la première courbe (12) de la première pression (5) et de la seconde courbe (14) de la seconde pression (7), différente de la première, en sorte que la seconde pression (7) peut être déduite avec une grande précision à partir de la première courbe (12) de la première pression (5).

2. Procédé selon la revendication 1, dans lequel, pour la définition des points de fonctionnement (9) et des positions d'angle de vilebrequin (10), le moteur à combustion interne (1) est mis en fonctionnement sur un banc d'essai selon un procédé sur banc d'essai.

3. Procédé selon la revendication 2, dans lequel, pour le procédé sur banc d'essai, un état de la conduite de gaz d'échappement (2) en aval du turbocompresseur à gaz d'échappement (4) est connu en ce qui concerne une résistance à l'écoulement et une contre-pression d'échappement (11) actuelle, qui en résulte, dans la seconde section (8) ; dans lequel le procédé sur banc d'essai comprend au moins les étapes suivantes :
a) la mesure d'une première courbe (12) de la première pression (5) pendant le fonctionnement du moteur à combustion interne (1) à l'aide d'un premier capteur (13) ;
b) la mesure d'une seconde courbe (14) de la seconde pression (7) pendant le fonctionnement du moteur à combustion interne (1) à l'aide d'un second capteur (15) ;
c) la définition des points de fonctionnement (9) et des positions d'angle de vilebrequin (10) pour lesquels la première pression (5) correspond à la seconde pression (7).

4. Procédé selon la revendication 3, dans lequel, à partir de l'étape c), une caractéristique (16) est définie pour une valeur d'adaptation par laquelle une seconde pression (7) est déterminée pour d'autres points de fonctionnement (9) du moteur à combustion interne (1) à partir de la mesure de la première pression (5).

5. Procédé selon l'une des revendications précédentes, dans lequel, pendant le fonctionnement du moteur à combustion interne (1), la seconde pression (7), et donc une contre-pression d'échappement (11) actuelle dans la seconde section (8), est déterminée à l'aide d'une modification de la première pression (5).

6. Procédé selon la revendication 5, dans lequel la contre-pression d'échappement (11) actuelle est utilisée au moins pour les procédés de régulation suivants :
(1) régulation d'une pression de charge pour le moteur à combustion interne (1) ;
(2) régulation d'un modèle de changement de charge du moteur à combustion interne (1) ;
(3) diagnostic d'une survitesse du turbocompresseur à gaz d'échappement ;
(4) régulation de la régénération d'un composant de traitement des gaz d'échappement (17) disposé dans la seconde section (8).

7. Procédé selon l'une des revendications 5 et 6 précédentes, dans lequel au moins un composant de traitement des gaz d'échappement (17) est disposé dans la seconde section (8), composant de traitement des gaz d'échappement par lequel la contre-pression d'échappement (11) actuelle est affectée par la suie dans la seconde section (8) en amont du composant de traitement des gaz d'échappement (17) en fonction d'au moins une charge (18) du composant de traitement des gaz d'échappement (17) ; dans lequel la charge (18) peut être déterminée par la détermination de la contre-pression d'échappement (11) actuelle.

8. Moteur à combustion interne (1) comportant une conduite de gaz d'échappement (2) à travers laquelle un gaz d'échappement (3) peut être conduit en partant du moteur à combustion interne (1) par l'intermédiaire d'un turbocompresseur à gaz d'échappement (4), dans lequel la conduite de gaz d'échappement (2) présente une première section (6) en aval du moteur à combustion interne (1) et en amont du turbocompresseur à gaz d'échappement (4) et une seconde section (8) en aval du turbocompresseur à gaz d'échappement (4) ; dans lequel un premier capteur (13) est disposé dans la première section (6) pour mesurer une première pression (5) ; dans lequel le moteur à combustion interne (1) comprend en outre un appareil de commande (21) qui est apte à mettre en œuvre le procédé selon l'une des revendications 1 à 7 précédentes.

9. Programme d'ordinateur (19) comprenant un code de programme qui exécute le procédé selon l'une des revendications 1 à 7 lorsqu'il est exécuté sur l'appareil de commande (21) du moteur à combustion interne selon la revendication 8.

10. Support de stockage (20) lisible par machine, sur lequel est stocké le programme d'ordinateur (19) selon la revendication 9.
